# EUROPÄISCHE PATENTSCHRIFT

(11) **EP 1 539 450 B1**
(45) Veröffentlichungstag und Bekanntmachung des Hinweises auf die Patenterteilung: **22.10.2008**
(21) Anmeldenummer: 03807813.5
(22) Anmeldetag: 29.08.2003
(51) Int. Cl.: B29B 7/44, B29B 7/74, B01F 15/00

(54) **VERFAHREN ZUR VERMISCHUNG EINER POLYOL- UND EINER ISOCYANATKOMPONENTE**
METHOD FOR MIXING A POLYOL CONSTITUENT AND AN ISOCYANATE CONSTITUENT
PROCEDE POUR MELANGER UN COMPOSE POLYOL ET UN COMPOSE ISOCYANATE

(30) Priorität: 11.09.2002 DE 10242100
(43) Veröffentlichungstag der Anmeldung: 15.06.2005
(73) Patentinhaber: Hennecke GmbH, 51379 Leverkusen (DE)
(72) Erfinder: SULZBACH, Hans-Michael, 53639 Königswinter (DE); RAFFEL, Reiner, 53721 Siegburg (DE); WIRTH, Jürgen, 51147 Köln (DE); PAWLIK, Wolfgang, 50735 Köln (DE); THIEBES, Florian, 53639 Königswinter (DE); RÖHRIG, Lothar, 53919 Neunkirchen-Seelscheid (DE)
(74) Vertreter: Gosdin, Michael
(86) Internationale Anmeldenummer: PCT/EP2003/009626
(87) Internationale Veröffentlichungsnummer: WO 2004/033173

(56) Entgegenhaltungen:
- US-A- 3 051 455
- US-A- 3 319 937
- US-A- 3 881 871
- US-A- 4 107 793
- US-A- 4 805 154

## Beschreibung

Die Erfindung betrifft ein Verfahren zur Herstellung von fein zelligem Polyurethanschaum durch kontinuierliche Vermischung mindestens einer Polyolkomponente und mindestens einer Isocyanatkomponente und gegebenenfalls von Additiven zu einem Polyurethan-Reaktionsgemisch in einem Rührermischer; gemäß dem Oberbegriff des Patentanspruchs 1. Ein Verfahren vergleichbarer Art ist beispielsweise aus der US-A3 881 871 bekannt.

Polyurethan-Schaumkunststoff entsteht durch die chemische Reaktion von Polyol, Isocyanat und gegebenenfalls Zusatzkomponenten, wie Stabilisatoren, Aktivatoren und Farbstoffen. Damit die flüssigen Komponenten miteinander reagieren können, müssen sie in geeigneter Weise homogen miteinander vermischt werden. Zur Ausführung dieser verfahrenstechnischen Grundoperation kennt man verschiedene Grundprinzipien. Eine Möglichkeit, die Polyurethan-Rohstoffe zu vermischen, bietet der Einsatz von kontinuierlich arbeitenden Rührermischern. Diese Rührermischer bestehen in der Regel aus einer rotationssymmetrischen Mischkammer, in der ein Rührorgan (nachfolgend auch als Rührer bezeichnet), angetrieben von einem Motor, rotiert. Optional kann die Mischkammer innen feststehende Einbauten besitzen, die den Rührvorgang unterstützen und vielfach auch als Gegenstifte bezeichnet werden. Die Mischkammer besitzt kurz vor der Auslassöffnung oftmals eine Drossel, mit der der Mischkammerdruck während des Produktionsvorganges reguliert werden kann. Bei kontinuierlich arbeitenden Rührermischern werden die zu vermischenden Komponenten in der Regel radial von außen zugeführt. Die Zuführung in die Mischkammer erfolgt dabei durch eingeschraubte Düsen oder durch Rohre. Das Polyurethan-Reaktionsgemisch, welches durch die Vermischung der Polyurethan-Rohstoffe entsteht, verlässt die Mischkammer durch eine zentrisch angeordnete Auslassöffnung. Die zu vermischenden Komponenten werden dem Mischer mit Hilfe von Pumpen zugeführt.

Die bisher in der Herstellung von Polyurethan-Schaumstoff eingesetzten Rührer, wie z.B. der häufig verwendete Stiftrührer, lösen nur die Aufgabe, die Komponenten zur Erzeugung eines Polyurethan-Reaktionsgemisches homogen zu vermischen. Hierbei wird der Strömung, die durch die Pumpen erzeugt wird, eine weitere Strömung überlagert, die durch die Ratation des Rührers erzeugt wird. Diese durch den Rührer erzeugte Rührerströmung hat die Aufgabe, alle Komponenten homogen miteinander zu mischen. Diese Rührerströmung lässt unter anderem Strömungswirbel entstehen, die der durch die Pumpen erzeugten Strömung einen Widerstand entgegensetzen. Mit steigender Rührerdrehzahl nimmt somit der Strömungswiderstand des Rührermischers zu, der sich in einem höheren Druckverlust und damit in einem höheren Mischkammerdruck äußert.

Der Mischer wird durch die Pumpen zwangsweise durchströmt. Die mittlere Verweilzeit des Gemisches im Mischer wird dabei durch den Durchsatz an Komponenten und das Volumen der Mischkammer bestimmt. Die mittlere Verweilzeit errechnet sich aus dem Quotienten der Summe der Volumenströme und dem Mischkammervolumen. Der Wert der mittleren Verweilzeit liegt üblicherweise in einem Bereich von 0,1 bis 2,5 Sekunden. Der Mischer bietet der Strömung einen hydrodynamischen Widerstand. Somit erzeugt er einen Druckverlust, der direkt den Druck in der Mischkammer, den sogenannten Mischkammerdruck, bestimmt. Der Mischkammerdruck wird in der Regel in der Zulaufleitung des Polyolstromes gemessen.

Wichtige Prozessparameter, die die spätere Qualität des Polyurethan-Schaumstoffes beeinflussen, sind die Rührerdrehzahl, der Mischkammerdruck und der Durchsatz an Polyurethan-Reaktionsgemisch. Es ist bekannt, dass der Mischkammerdruck bei der Herstellung von Polyurethan-Weichschaum entscheidenden Einfluss auf die Zellenzahl des fertigen Schaumkunststoffes besitzt (EP-A1-0 565 974). Im Allgemeinen lässt sich feinzelliger Schaumkunststoff nur bei niedrigem Mischkammerdruck herstellen. Bei hohem Mischkammerdruck ist der erzeugte Schaumkunststoff grobzellig.

Bei der Verwendung der bekannten Rührer sind die Prozessparameter Rührerdrehzahl, Durchsatz und Mischkammerdruck nicht unabhängig voneinander einstellbar.

Wird der Durchsatz erhöht, erhöht sich auch der Mischkammerdruck. Ebenso erhöht sich der Mischkammerdruck, wenn die Rührerdrehzahl angehoben wird. Hinzu kommt, dass bei einer Steigerung der Durchsatzmenge die mittlere Verweilzeit in der Mischkammer sinkt. Um bei einer reduzierten Verweilzeit immer noch ein homogen vermischtes Polyurethan-Reaktionsgemisch herstellen zu können, ist eine entsprechend höhere Rührerdrehzahl erforderlich. Bei einer Erhöhung des Durchsatzes erhöht sich der Mischkammerdruck somit nicht nur aufgrund des durch die erhöhte Austragsleistung bedingten erhöhten Strömungswiderstands, sondern auch zusätzlich durch die erforderliche Steigerung der Rührerdrehzahl. Bei hohen Austragsleistungen ist es bei gegebener Baugröße des Rührermischers daher nicht möglich, einen niedrigen Mischkammerdruck einzustellen, der für die Herstellung von feinzelligem Schaumkunststoff aber benötigt wird.

Es sind Rührorgane bekannt, die eine axiale Förderung aufweisen, wie z.B. Schrägblattrührer und Propellerrührer. Diese werden jedoch in der Regel in großen Behältern betrieben, wo der Abstand zur Außenwand relativ groß ist. Zur kontinuierlichen Vermischung von Polyurethan-Komponenten mit dem Ziel, ein homogenes Polyurethan-Reaktionsgemisch zu erzeugen, wurden bisher nur Rührorgane eingesetzt, die keine axiale Förderung besitzen. Kennzeichnend für Rührermischer zur Vermischung von Polyurethan-Komponenten ist vor allem der geringe Abstand, der zwischen Mischkammerwand und rotierendem Rührorgan verbleibt. In der Regel verbleibt hier ein Spalt, der nicht größer ist als 5 mm. Weiterhin ist die geringe Verweilzeit von üblicherweise zwischen 0,1 und 2,5 Sekunden im Rührermischer bei der Herstellung von Polyurethan-Schaum charakteristisch.

Aus der US-A-3 881 871 ist ein Rührermischkopf bekannt, der einen Rührer mit unter einem Winkel angestellten Rührerblättern zeigt. Diese Rührerblätter sind aufeinanderfolgend wechselsinnig angeordnet, so dass ein Pumpeffekt, d. h. eine Druckabsenkung im Mischsystem nicht erzeugbar ist.

Die US-A-3 051 455 beschreibt eine Mischschnecke, die mischen und fördern kann. Allerdings ist keine besondere Maßnahme am Ausgang der Mischkammer getroffen, insbesondere ist ein Drosselorgan hier nicht vorgesehen.

Aus der US-A-3 319 937 geht ein Rührermischer hervor, der am Austritt der Mischkammer eine verstellbare Drossel hat. Der hier vorgesehene Rührer hat indes keine schräg angestellten Blätter, so dass er keinen Pumpeffekt erzeugen kann.

Schließlich zeigen die US-A-4 107 793 und die US-A-4 805 154 jeweils Rührermischer, die schräg gestellte Rührerblätter besitzen. Auch hier sind indes der Mischkammer keine verstellbaren Drosseln nachgeordnet. Somit ist auch bei diesen Rührermischern der Druck in der Mischkammer nicht durch eine aufeinander abgestimmte Verstellung der Drehzahl des Rührers und der Drosselwirkung einer Drossel möglich.

Die Aufgabe der vorliegenden Erfindung besteht daher darin, ein Verfahren zur Vermischung wenigstens einer Polyolkomponente und wenigstens einer Isocyanatkomponente zur Verfügung zu stellen, bei dem die Rührerdrehzahl und der Mischkammerdruck unabhängig von der Austragsleistung auf jeden gewünschten Wert eingestellt werden können, so dass feinzellige Polyrethan-Schäume hergestellt werden können.

Gemäß der Erfindung wird die obenstehende Aufgabe durch ein Verfahren nach Patentanspruch 1 gelöst.

Vorteilhafte Weiterbildungen der Erfindung sind Gegenstand der abhängigen Ansprüche.

Als Isocyanatkomponente sind die in der Polyurethan-Chemie gängigen Di- und/oder Polyisocyanate, wie beispielsweise Toluylendiisocyanat (TDI), oder Isocyanate der Diphenylmethanreihe (MDI) geeignet.

Als Polyolkomponente sind die in der Polyurethan-Chemie gängigen Polyole mit gegenüber Isocyanatgruppen reaktiven Wasserstoffatomen geeignet, wie Polyether, Polyester oder Polyamine.

Als Additive können die in der Polyurethan-Chemie gängigen Hilfs- und Zusatzstoffe, wie beispielsweise Treibmittel, Katalysatoren, Emulgatoren, Stabilisatoren, Reaktionsverzögerer, Pigmente, Farbstoffe, Flammschutzmittel oder Füllstoffe, eingesetzt werden.

Als Drossel oder Drosselorgan sind beispielsweise Quetschventile oder Membranventile geeignet.

Bei dem erfindungsgemäßen Verfahren ist der Druck in der Mischkammer durch die Kombination des eingesetzten axial fördernden Rührers mit der Drossel unabhängig von der Austragsleistung und der Rührerdrehzahl beliebig einstellbar. Dabei bewirkt die Geometrie des eingesetzten Rührers, dass eine Erhöhung der Rührerdrehzahl ohne die Verwendung eines Drosselorganes einen Abfall des Mischkammerdruckes bewirkt oder den Mischkammerdruck auf gleichem Niveau belässt. Um dieses zu erreichen, ist der Rührer als Schrägblatt-Rührer ausgeführt. Dieser besteht aus einer angetriebenen Welle, welche in einer oder mehreren Stufen angeordnet mit tragflügelartigen Schaufeln bzw. Blättern besetzt ist. Eine Stufe besteht dabei aus drei bis sechs Schaufeln oder Blättern. Diese Blätter oder Schaufeln sind so befestigt, dass sie gegenüber der Drehachse um einen Winkel α verdreht sind. Bestehen die Schaufeln oder Blätter anstatt aus einer ebenen Platte aus einem Tragflügelprofil, so entspricht α dem Winkel zwischen Profilsehne und Drehachse. Der Winkel α bezeichnet die Schrägstellung der Blätter bzw. Schaufeln. Bei Winkelgraden, die größer 0° und kleiner 90° sind, besitzt der Rührer einen axial fördernden Charakter.

Erfindungsgemäß wird ein Winkel α von 10 bis 80°, vorzugsweise 20 bis 70°, besonders bevorzugt 30 bis 60°, eingestellt. Die Förderrichtung hängt dabei von der Drehrichtung ab. Diese muss so gewählt werden, dass der Rührer in Richtung des Gemischaustrittes axial fördert. Würde der dem Mischer zugeführte Volumenstrom aus einem Reservoir frei zulaufen, so würde das System bei einer Anhebung der Rührerdrehzahl mit einer erhöhten Austragsleistung antworten. Da der durch den Mischer durchgesetzte Volumenstrom aber allein durch die Pumpen vorgegeben wird, kann das System bei einer Steigerung der Rührerdrehzahl nicht mit einer erhöhten Austragsleistung reagieren. Daher bewirkt ein axial fördernder Rührer hier eine Druckabsenkung des Mischkammerdruckes. Durch diesen axialen Pumpeffekt kann der Mischkammerdruck mit zunehmender Rührerdrehzahl abgesenkt oder konstant gehalten werden.

Durch die Kombination des gerade beschriebenen Rührers mit einem Drosselorgan besteht nun die Möglichkeit, jeden beliebigen Mischkammerdruck einzustellen. Um die Polyurethan-Rohstoffe ausreichend homogen miteinander zu vermischen, ist je nach eingestellter Gesamtaustragsleistung des Rührermischers eine Mindestdrehzahl des Rührers notwendig. Ist die Drossel vollständig geöffnet, so dass das Drosselorgan der Strömung keinen Widerstand bietet, so stellt sich dabei ein definierter Mischkammerdruck ein. Ist dieser Mischkammerdruck größer als der für die Produktion des Schaumkunststoffes gewünschte Mischkammerdruck, so kann er durch Anheben der Rührerdrehzahl auf den gewünschten Wert abgesenkt werden. Ist der Mischkammerdruck jedoch kleiner als der gewünschte Mischkammerdruck, so kann der Mischkammerdruck durch ein Zustellen der Drossel, wodurch das Drosselorgan der Strömung des Polyurethan-Reaktionsgemischs einen hydrodynamischen Widerstand bietet, auf den gewünschten Wert angehoben werden.

Erfindungsgemäß kann die Feinjustierung des Mischkammerdruckes sowohl durch ein Verstellen der Drossel bei konstant gehaltener Rührerdrehzahl als auch durch ein Verstellen der Rührerdrehzahl bei konstant eingestellter Drossel vorgenommen werden. Die Feinjustierung kann grundsätzlich aber auch durch gleichzeitige Verstellung der Drossel und der Rührerdrehzahl erfolgen.

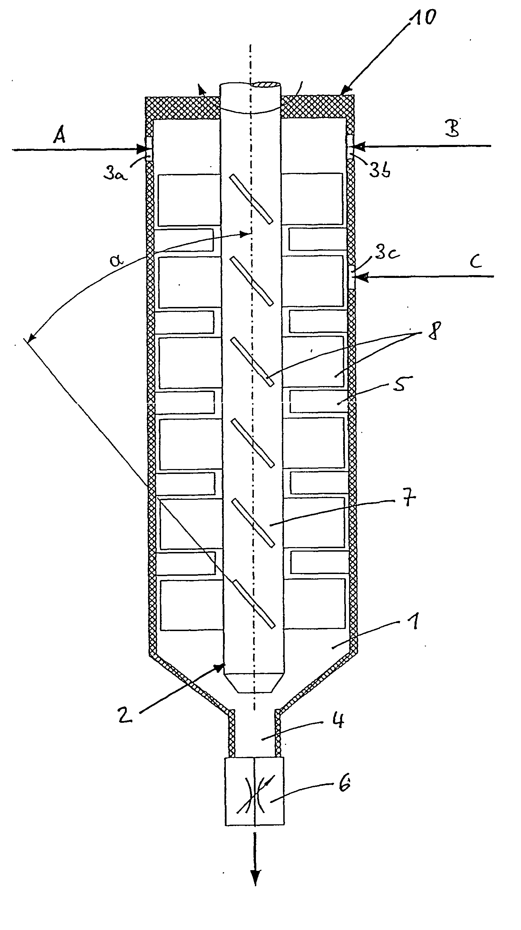

Die Erfindung wird anhand der nachstehenden Figur 1 näher erläutert:
Figur 1 zeigt schematisch einen Rührermischer 10 zur erfindungsgemäßen Vermischung eines Polyurethan-Reaktionsgemisches. Der Rührermischer 10 besteht aus einer zylindrischen Mischkammer 1 und einem darin mit verstellbarer Drehzahl rotierenden Rührer 2, der durch einen Motor (nicht dargestellt) angetrieben wird. Der Rührer 2 enthält dabei eine Rührerwelle 7 und darauf angeordnete Blätter 8, wobei die Blätter 8 in sechs übereinander angeordneten Ebenen an der Rührerwelle 7 angebracht sind. Pro Ebene sind auf der Rührerwelle 7 vier Blätter 8 angeordnet. Jeweils ein Blatt pro Ebene befindet sich in der Darstellung nach Figur 1 auf der Rückseite der Rührerwelle 7 und ist daher nicht zu sehen. Die Schaufeln 8 sind dabei gegenüber der Rotationsachse der Rührerwelle 7 um einen Winkel α von 40° verdreht. Im Umfangsbereich der Mischkammer 1 sind zusätzlich strombrechende Elemente 5 im Zwischenraum zwischen den Ebenen der Blätter 8 angebracht. Der Rührermischer enthält weiterhin Zulauföffnungen (3a, 3b, 3c) für die Komponenten A (Isocyanat), B (Polyol) und C (Additive) sowie eine Auslassöffnung 4 für das Polyurethan-Reaktionsgemisch und eine nachgeschaltete Drossel 6.

Die Komponenten A, B und C werden durch die Zulauföffnungen (3a, 3b, 3c) in die Mischkammer 1 des Rührermischers 10 dosierend gefördert, werden darin durch den Rührer 2 vermischt und treten dann als Polyurethan-Reaktionsgemisch durch die Auslassöffnung 4 aus der Mischkammer 1 aus. Das Polyurethan-Reaktionsgemisch durchläuft danach die verstellbare Drossel 6.

Durch die schräge Anstellung der Blätter 8 kann der Druck in der Mischkammer 1 durch Erhöhung der Drehzahl leicht abgesenkt werden. Eine Verringerung der Drehzahl bewirkt entsprechend eine Erhöhung des Drucks in der Mischkammer 1. Der Druck in der Mischkammer 1 kann aber auch durch stärkere Androsselung der Drossel 6 erreicht werden. Auf diese Weise können durch eine abgestimmte Einstellung der Drehzahl des Rührers 2 und der Öffnung der Drossel 6 der Mischkammerdruck und die Qualität der Vermischung voneinander unabhängig variiert werden.

## Patentansprüche

1. Verfahren zur Herstellung von feinzelligem Polyurethanschaum durch kontinuierliche Vermischung mindestens einer Polyolkomponente und mindestens einer Isocyanatkomponente und gegebenenfalls von Additiven zu einem Polyurethan-Reaktionsgemisch in einem Rührermischer (10), enthaltend eine zylindrische Mischkammer (1) und einen darin mit verstellbarer Drehzahl rotierenden Rührer (2), der eine Rührerwelle (7) und darauf in einer oder mehreren Ebenen angeordnete Schaufeln oder Blätter (8) enthält, Zulauföffnungen (3a, 3b, 3c) für die Polyolkomponente, die Isocyanatkomponente und gegebenenfalls die Additive und eine Auslassöffnung (4) für das Polyurethan-Reaktionsgemisch, bei dem die Polyolkomponente, die Isocyanatkomponente und gegebenenfalls die Additive dosierend durch die Zulauföffnungen (3a, 3b, 3c) in die Mischkammer (1) gefördert werden, in der Mischkammer (1) zu einem Polyurethan-Reaktionsgemisch vermischt werden, wobei die Verweilzeit für das Polyurethan-Reaktionsgemisch in der Mischkammer (1) 0,1 bis 2,5 Sekunden beträgt, und anschließend das Polyurethan-Reaktionsgemisch aus der Mischkammer (1) durch die Auslassöffnung (4) ausgetragen wird,
**dadurch gekennzeichnet, dass**
in jeder Ebene drei bis sechs Schaufeln oder Blätter (8) auf der Rührerwelle (7) angeordnet sind und die Schaufeln oder Blätter (8) gegenüber der Rotationsachse der Rührerwelle (7) um einen Winkel α von 10 bis 80° verdreht sind, und der Auslassöffnung (4) eine verstellbare Drossel (6) nachgeordnet ist, in welcher das Polyurcthan-Reaktionsgemisch entspannt wird, und der Druck in der Mischkammer (1) durch eine aufeinander abgestimmte Verstellung der Drehzahl des Rührers (2) und der Drosselwirkung der Drossel (6) eingestellt wird.

2. Verfahren nach Anspruch 1, bei dem die Feinjustierung des Druckes in der Mischkammer (1) bei konstanter Drosselstellung durch Verstellen der Rührerdrehzahl erfolgt.

3. Verfahren nach Anspruch 1, bei dem die Feinjustierung des Druckes in der Mischkammer bei konstanter Rührerdrehzahl durch Verstellen der Drossel erfolgt.

## Claims

1. Method for the production of fine-cell polyurethane foam by continuous mixing of at least one polyol component and at least one isocyanate component and optionally additives to form a polyurethane reaction mixture in a stirrer mixer (10), containing a cylindrical mixing chamber (1) and a stirrer (2) rotating therein with adjustable rotational speed, the stirrer containing a stirrer shaft (7) and scoops or blades (8) arranged thereon in one or more levels, and also containing feed openings (3a, 3b, 3c) for the polyol component, the isocyanate component and optionally the additives, and an outlet opening (4) for the polyurethane reaction mixture, in which the polyol component, the isocyanate component and optionally the additives are fed in a metered manner through the feed openings (3a, 3b, 3c) into the mixing chamber (1), are mixed in the mixing chamber (1) to form a polyurethane reaction mixture, wherein the residence time of the polyurethane reaction mixture in the mixing chamber (1) is between 0.1 and 2.5 seconds, and then the polyurethane reaction mixture is discharged from the mixing chamber (1) through the outlet opening (4),
**characterized in that**
three to six scoops or blades (8) are arranged in each level on the stirrer shaft (7) and the scoops or blades (8) are rotated by an angle α of 10° to 80° counter to the axis of rotation of the stirrer shaft (7) and the outlet opening (4) is following an adjustable throttle (6) in which the polyurethane mixture is decompressed and the pressure in the mixing chamber (1) is adjusted by a mutually matched setting of the rotational speed of the stirrer (2) and of the throttling effect of the throttle (6).

2. Method according to claim 1, in which the vernier adjustment of the pressure in the mixing chamber (1) takes place at a constant throttle position by adjustment of the rotational speed of the stirrer.

3. Method according to claim 1, in which the vernier adjustment of the pressure in the mixing chamber takes place at a constant rotational speed of the stirrer by adjustment of the throttle.

## Revendications

1. Procédé de fabrication de mousse de polyuréthane à fines cellules par mélange continu d'au moins un composant polyol, d'au moins un composant isocyanate et éventuellement d'additifs, pour former un mélange de réaction de polyuréthane dans un mélangeur brassé (10) qui contient une chambre cylindrique de mélange (1) dans laquelle un agitateur (2) tourne à vitesse de rotation réglable et contient un arbre d'agitateur (7) sur lequel des aubes ou pales (8) sont disposées dans un ou plusieurs plans, des ouvertures d'amenée (3a, 3b, 3c) du composant polyol, du composant isocyanate et éventuellement des additifs et une ouverture de sortie (4) du mélange de réaction de polyuréthane, et dans lequel le composant polyol, le composant isocyanate et les éventuels additifs sont transportés de manière dosée dans la chambre de mélange (1) par les ouvertures d'amenée (3a, 3b, 3c) et sont mélangés en un mélange de réaction de polyuréthane dans la chambre de mélange (1), le temps de séjour du mélange de réaction de polyuréthane dans la chambre de réaction (1) étant compris entre 0,1 et 2,5 secondes, le mélange de réaction de polyuréthane étant ensuite extrait de la chambre de mélange (1) par l'ouverture de sortie (4),
**caractérisé en ce que**
dans chaque plan, de trois à six aubes ou pales (8) sont disposées sur l'arbre (7) de l'agitateur et les aubes ou pales (8) sont tournées d'un angle α de 10 à 80° par rapport à l'axe de rotation de l'arbre (7) de l'agitateur, **en ce que** l'ouverture de sortie (4) est suivie par un étranglement réglable (6) dans lequel le mélange de réaction de polyuréthane est détendu et **en ce que** la pression de la chambre de mélange (1) est réglée en ajustant de manière mutuellement accordée la vitesse de rotation de l'agitateur (2) et l'effet d'étranglement de l'étranglement (6).

2. Procédé selon la revendication 1, dans lequel l'ajustement fin de la pression qui règne dans la chambre de mélange (1) s'effectue par ajustement de la vitesse de rotation de l'agitateur tout en maintenant constante la position de l'étranglement.

3. Procédé selon la revendication 1, dans lequel l'ajustement fin de la pression qui règne dans la chambre de mélange s'effectue par ajustement de l'étranglement tout en maintenant constante la vitesse de rotation de l'agitateur.
